# EUROPEAN PATENT APPLICATION

(11) **EP 2 116 159 A1**
(43) Date of publication of application: **11.11.2009**
(21) Application number: 08704325.3
(22) Date of filing: 01.02.2008
(51) Int. Cl.: A47J 27/00, A47J 36/02, H05B 6/12

(54) **INDUCTION HEATING COOKING CONTAINER**

(30) Priority: 07.02.2007 JP 2007027996
(71) Applicant: Toyo Seikan Kaisha, Ltd., Tokyo 100-8522 (JP)
(72) Inventor: FUJITA, Hagino, Yokohama-shi Kanagawa 230-0001 (JP); AIKAWA, Takayuki, Yokohama-shi Kanagawa 230-0001 (JP)
(74) Representative: Liebetanz, Michael
(86) International application number: PCT/JP2008/051616
(87) International publication number: WO 2008/096667

(57) **Abstract**

An induction heating body 3 attached to an inner bottom surface 21 of a non-magnetic (or non-conductive) container body 2 in which heat is generated by eddy current induced by a high-frequency magnetic field has rising parts 32 provided along the outer periphery of a flat surface part 31. One or two or more of the rising parts 32 are partially cut, and the outer periphery of the flat surface part 31 at a part in which the rising part 32 is cut are allowed to serve as an open edge 32. With this configuration, a part which is selectively broken under specific conditions such as non-water heating is provided in the induction heating body 3 to enhance safety, and heating efficiency is prevented from being lowered in normal use. By effectively eliminating breakage by heat of the container main body 2, an induction heating cooking container is provided which enables cooking to be performed without problems and can be used easily.

## Description

### TECHNICAL FIELD

The present invention relates to an induction heating cooking container provided with an induction heating body in which heat is generated by joule heat generated by eddy current induced by a high-frequency magnetic field caused by an induction heating coil of an induction heating cooker or the like.

### BACKGROUND ART

Heretofore, the mainstream in cooking equipment was equipment using gas as a heat source. In recent years, however, cooking equipment generally known as induction heating cookers has come into wide use not only for commercial purposes, such as in the restaurant business, but also for household purposes, from the viewpoints of, for instance, safety, cleanliness, convenience and economy.

An induction heating cooker of this type heats an object to be heated by joule heat generated by eddy current induced by a high-frequency magnetic field caused by an induction heating coil provided inside the cooker. Therefore, heating and cooking can be performed safely without using fire. However, a cooker of this type has a disadvantage that usable cookware is limited, and cookware made of a magnetic metal such as iron or enameled iron must be used exclusively.

Under such circumstances, for solving the above-mentioned problem associated with the induction heating cooker, Patent Document 1 or Patent Document 2 discloses a container for an induction heating cooker provided with a non-magnetic (or non-conductive) container main body, for example.
Patent Document 1: JP-A-2003-325327
Patent Document 2: JP-A-H07-296963

### DISCLOSURE OF THE INVENTION

### Problem to be Solved by the Invention

Patent Document 1 proposes a heating method in which aluminum foil having a thickness of 0.10 to 100 µm is heated by eddy current generated by an induction heating cooker. According to the heating method of Patent Document 1, content in a container can be easily heated even when a nonmagnetic container is used for cooking.
However, such heating method encounters a problem that, when erroneously heated without water or the like, aluminum foil is suddenly heated, burns easily and scatters, or the container is damaged by heat.

Patent Document 2 discloses an induction heating cooker with safety mechanism. Specifically, it has a conductive heat-generating body in the form of a thin film on the inner bottom surface of a non-conductive container main body, in which a narrow part of which the width in the radial direction from the outer periphery is reduced by punching the middle part of the heat-generating body in a predetermined shape. According to the induction heating cooker disclosed in Patent Document 2, the narrow part provided in the heat-generating body is selectively fused at the time of erroneous handling such as non-water heating, whereby heating or ignition of the container by no-water heating or the like can be prevented.

As a result of intensive studies made by the inventors, it has been found that there are still problems awaiting a solution in putting these conventional technologies into practical use.

Specifically, in the induction heating cooker disclosed in Patent Document 2, since the narrow part provided in the heat-generating part is selectively fused by locally heating it to high temperatures, the output of the heat-generating body is determined by the narrow part of which the temperature becomes the highest. Therefore, other parts of the heating body are not efficiently heated, resulting in poor heating efficiency.
In addition, in the induction heating cooker in Patent Document 2, a non-contact part is provided so as to separate the bottom surface of the narrow part and the inside bottom surface of the container main body. However, since heat generation at the narrow part tends to be excessive, the container body may be damaged even though such a non-contact part is provided.

The present invention has been made in view of the above-mentioned circumstances, and an object thereof is to provide an induction heating cooking container which can be used easily without causing problems on cooking. In the induction heating cooking container of the present invention, in a cooking container in which a heat-generating body which generates heat by eddy current induced by a high-frequency magnetic field is provided in a non-magnetic (or non-conductive) container main body, a part which is selectively broken under certain circumstances such as non-water heating is provided in an induction heating body, thereby to enhance the safety thereof, and heating efficiency is prevented from being deteriorated during normal use, and breakage by heat of the container main body is effectively eliminated. Means for Solving the Problem

The induction heating cooking container according to the present invention is provided with on the inner bottom surface thereof an induction heating body in which heat is generated by eddy current induced by a high-frequency magnetic field, wherein said induction heating body has a flat surface part having a predetermined planer shape and a rising part provided along the outer periphery of said flat surface part, and one or two or more portions of said rising part is partially cut, and the outer periphery of said flat surface part where said rising part is cut is allowed to serve as an open edge.

In the induction heating cooking container according to the present invention with such a configuration, said open edge is selectively heated excessively under specific conditions such as non-water heating, thereby allowing said induction heating body to be broken. Accordingly, under predetermined circumstances, the outer periphery of the flat surface part, which is allowed to be the open edge, is selectively heated excessively to cause breakage from said open edge to the middle of the flat surface part, whereby safety mechanism works to stop an induction heating cooker. In addition, in normal use, no part is locally heated to excessively high temperatures as compared with other parts in the induction heating body in which a rising part is provided along the outer periphery of the flat surface part with a predetermined planer shape. The shape of the flat surface part can be arbitrarily determined. As a result, the entire flat surface part can be effectively heated to enhance its heating efficiency. In addition, breakage by heat of the container main body can be effectively prevented, whereby materials to be heated can be heated easily by means of a commercially-available induction heating cooker.
Further, the position at which the open edge is formed can be arbitrarily determined. Specifically, a part at which an induction heating body is broken, i.e. a part which tends to be heated excessively, can be set to be longest, whereby heating efficiency can be prevented from being deteriorated.

The induction heating cooking container according to the present invention may have a configuration in which the flat surface part of said induction heating body is smaller than the outer diameter of a heating coil which generates a high-frequency magnetic field and larger than the inner diameter of a heating coil which generates a high-frequency magnetic field.
Due to such a configuration, when placed on a predetermined position of an induction heating cooker, the outer periphery of the induction heating body installed in the container main body can be surely placed on the heating coil of an induction heating cooker.

In addition, the induction heating cooking container according to the present invention may have a configuration in which a conductive material, which has been cut into a predetermined shape, is folded in such a manner that the outer peripheral part thereof rises, thereby enabling the induction heating body to be formed.
Due to such a configuration, it is possible to form an induction heating body simply by folding the outer peripheral part of the induction heating body material, and to facilitate installation of the induction heating body to the container main body.

In addition, the induction heating cooking container according to the present invention may have a configuration in which the flat surface part of said induction heating body is formed in a shape which is almost similar to the planer shape of the inner bottom surface of said container main body, and the rising part of said induction heating body is formed such that it rises along the inner surface of the side wall part of the container main body.
Due to such a configuration, since the inner bottom surface of the container main body is almost entirely covered by the flat surface part of the induction heating body, non-uniform heating of materials to be heated hardly occurs.

Further, the induction heating cooking container according to the present invention may have a configuration in which the inner bottom surface of said container main body has a polygonal shape and said open edge is positioned in the corner of the polygon.
Due to such a configuration, it is possible to make the length from the center to the open edge of the flat surface part of the induction heating body longest. As a result, a larger part is occupied by a portion in which an eddy current density is relatively high, whereby heating efficiency at the time of heating materials to be heated can be enhanced.

### Advantageous Effects of the Invention

As mentioned above, according to the induction heating cooking container of the present invention, when enabling heating of materials to be heated by causing an induction heating body installed in the container main body to generate heat, a part which is selectively broken under certain circumstances such as non-water heating is provided in the induction heating body to enhance safety, and in normal use, heating efficiency is prevented from being lowered. In addition, by effectively eliminating breakage by heat of the container main body to enable cooking to be performed without problems, materials to be heated can be heated safely and easily by means of a commercially-available induction heating cooker.

### BRIEF DESCRIPTION OF THE DRAWINGS

FIG. 1 is a perspective view showing an outline of an embodiment of the induction heating cooking container according to the present invention;
FIG. 2 is a top view showing an outline of an embodiment of the induction heating cooking container according to the present invention;
FIG. 3 is a cross-sectional view taken along line A-A in FIG. 2;
FIG. 4 is a cross-sectional view taken along line B-B in FIG. 2;
FIG. 5 is an explanatory view showing a conductive material which has been cut into a predetermined shape and an induction heating body formed from this conductive material;
FIG. 6 is a graph showing one example of a relationship between the distance from the center of a heating coil provided in an induction heating cocker and the density of induced eddy current;
FIG. 7 is an explanatory view showing a positional relationship between the heating coil and the induction heating body in each graph;
FIG. 8 is an explanatory view showing a state in which the induction heating body is broken;
FIG. 9 is an explanatory view showing another example of the induction heating body;
FIG. 10 is an explanatory view showing another example of means for installing the induction heating body; and
FIG. 11 is an explanatory view showing still another example of the induction heating body.

### BEST MODE FOR CARRYING OUT THE INVENTION

Preferred embodiments of the present invention will be explained hereinbelow with reference to the drawings.

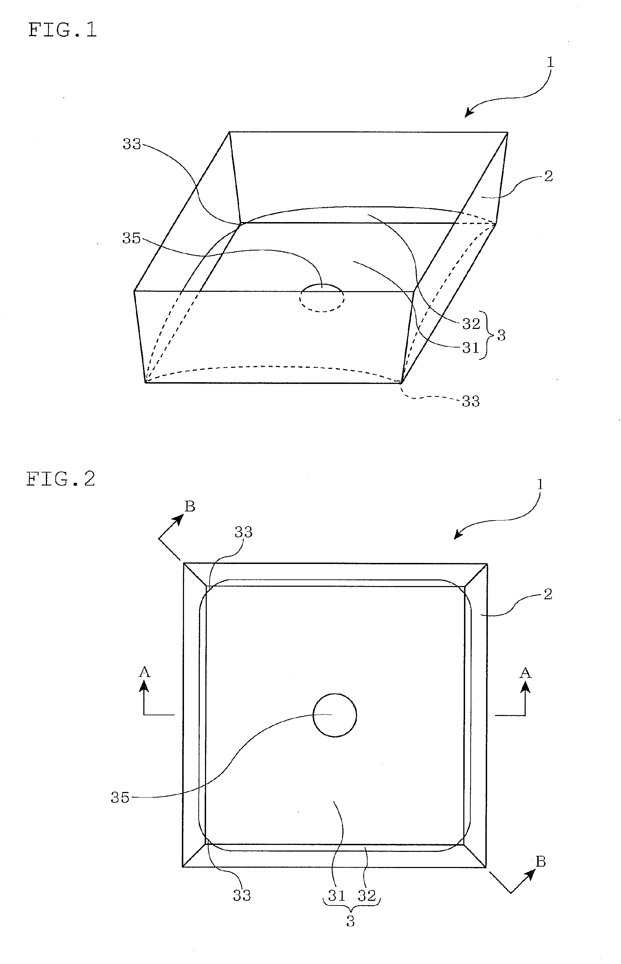

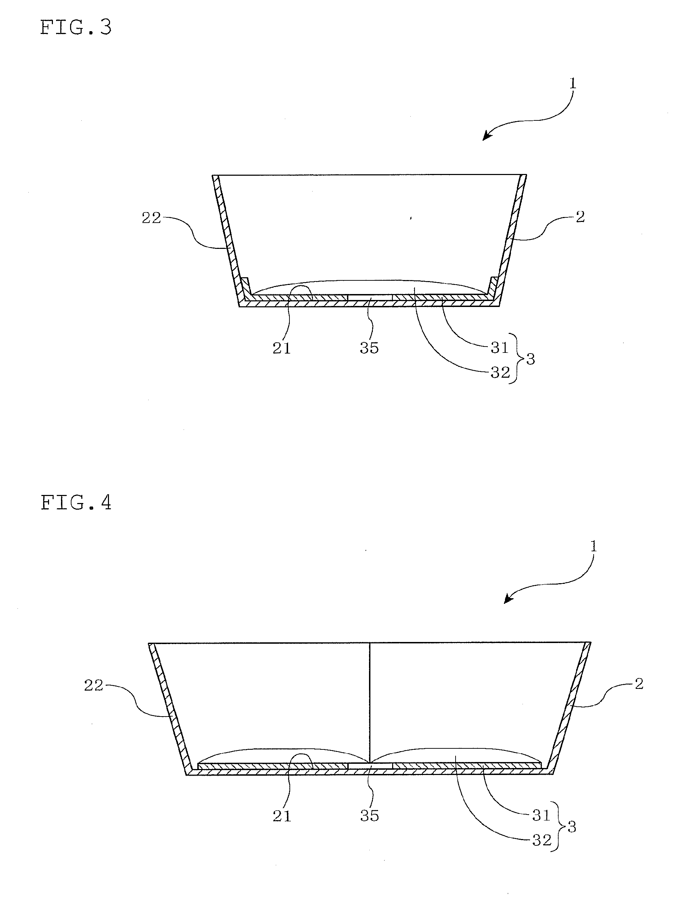

FIG. 1 is a perspective view showing an outline of an embodiment of the induction heating cooking container according to the present invention, and FIG. 2 is a top view of FIG. 1. FIG. 3 is a cross-sectional view taken along line A-A in FIG. 2, and FIG. 4 is a cross-sectional view taken along line B-B in FIG. 2.

In the shown example, a container 1 is provided with a container main body 2 for accommodating materials to be heated and an induction heating body 3 which generates heat by eddy current induced by a high-frequency magnetic field. The induction heating body 3 is installed at an inner bottom surface 21 of the container main body 2.

The inner bottom surface 21 of the container main body 2 has a planer shape which is almost square. A material to be heated can be accommodated by a side wall part 22 which is provided such that it surrounds said inner bottom surface 21. The planer shape of the inner bottom surface 21 is not limited to the example shown. For example, the inner bottom surface 21 may have a rectangular shape, a circular shape, or a polygonal shape such as triangle, pentagon, and hexagon.

The container main body 2 may be formed of a synthetic resin material such as a polystyrene-based resin such as polystyrene, a polyester-based resin such as polyethylene terephthalate, a polyolefin-based resin such as polypropylene and a polyamide-based resin, and various common non-magnetic materials including paper and glass. By forming the container main body 2 using these materials, an induction heating cooking container which is usable in an induction heating cocker can be provided at a low cost.

For the induction heating body 3, it is possible to use a conductive material which can generate heat by a mechanism in which eddy current is induced in the conductive material by a high-frequency magnetic field generated by an induction heating coil provided inside the induction heating cooker or the like, and the conductive material is then heated by the joule heat generated by the electric resistance thereof. Examples of such conductive materials include aluminum, nickel, gold, silver, copper, platinum, iron, cobalt, tin, zinc, alloys thereof, and a resin film or paper imparted with conductivity. More specifically, when aluminum is used as a metal material, the induction heating body 3 may be formed of aluminum foil having a thickness of about 0.10 to 100 µm.

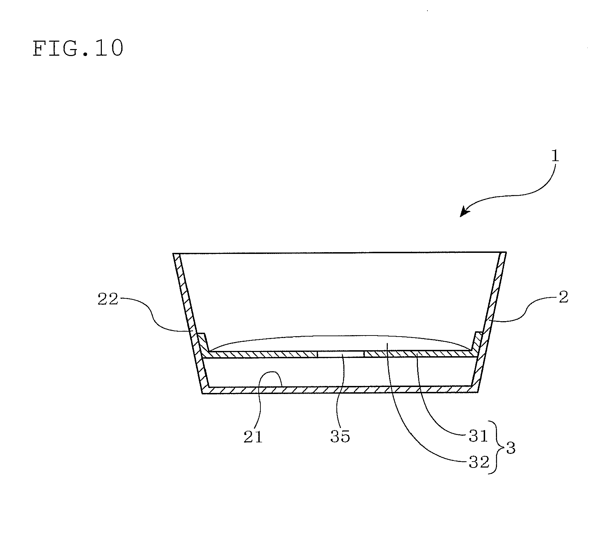

In this embodiment, by installing such induction heating body 3 on the inner bottom surface 21 of the container main body 2, materials to be heated which are accommodated within the container main body 2 can be heated by induction heating by means of an induction heating cooker.
In order to install the induction heating body 3 in the container main body 2, the induction heating body 3 may be adhered to the container main body 2 by heat sealing or by means of an adhesive tape or an adhesive. It is also possible to laminate the induction heating body 3 on the container main body 2 while covering the induction heating body 3 with a covering material. There are no specific restrictions on the means for installing the induction heating body 3.
In addition, as shown in FIG. 10, for example, the induction heating body 3 may be installed in such a manner that it is separated from the inner bottom surface 21 by adhering a rising part 32 of the induction heating body 3 to a side wall part 22 of the container main body 2. In order to install the induction heating body 3 such that it is separated from the inner bottom surface 21, although not particularly shown, it is possible to extend the rising part 32 to allow it to be engaged with the open edge of the container main body 2. It is also possible to allow a supporting part which is projected from the inner bottom surface 21 of the container main body 2 to support the induction heating body 3.
FIG. 10 is an explanatory view showing, in correspondence with FIG. 3, an example in which the rising part 32 is adhered to the side wall part 22 of the container main body 2.

In installing the induction heating body 3 to the container main body 2, it is preferred that the induction heating body 3 have a flat surface part 31 which has almost the same shape as the planer shape of the inner bottom surface 21 of the container main body 2, and that almost entire surface of the inner bottom surface 21 of the container main body 2 be covered by this flat surface part 31. By doing this, un-uniform heating of materials to be heated hardly occurs. For the reasons mentioned later, a through hole 35 as shown in the figure may be provided in such a size as will not cause un-uniform heating.

Further, the induction heating body 3 has the rising part 32 which is provided along the outer periphery of the flat surface part 31.
In the shown example, this rising part 32 is formed such that it rises along the inner surface of the side wall part 22 of the container main body 2. In addition, the parts thereof positioned in the four corners (angular parts) of the container main body 2 are partially cut. The outer periphery of the flat surface part 31 where the rising part 32 is partially cut is allowed to be an open edge 33.

Here, the open edge 33 is an edge formed by cutting the outer periphery of the flat surface part 31, and means a part remaining after cutting which has no folded or bent portions.

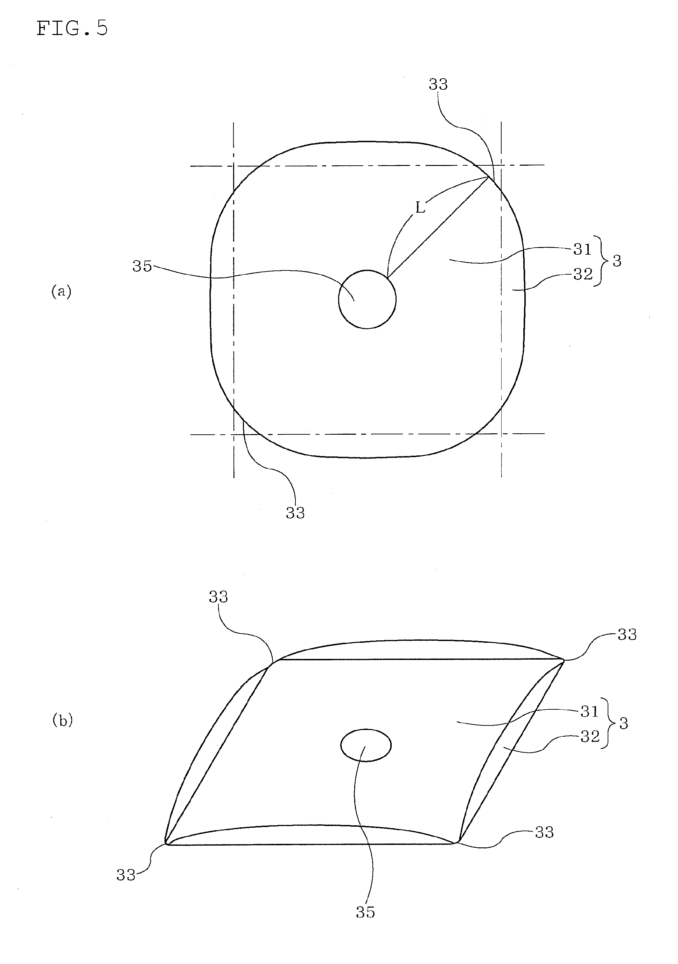

As shown in FIG. 5, such an induction heating body 3 can be formed by cutting the above-mentioned conductive material into a predetermined shape, and by folding its outer periphery such that it rises up (see FIG. 5(b)), for example. By doing this, it is possible to form the induction heating body 3 by simply folding the outer periphery part of the conductive material, thereby facilitating the installation of the induction heating body 3 in the container main body 2.
FIG. 5(a) is a top view of the conductive material which has been cut into a predetermined shape. FIG. 5(b) is a perspective view of the induction heating body 3 which is formed by folding a part shown by a dashed dot line in FIG. 5(a).

The container 1 as mentioned above is placed on a commercially-available induction heating cooker for use. The size thereof can be set according to the dimension of a heating coil provided in an induction heating cooker to be used. More specifically, a common heating coil provided in a commercially available induction heating cooker for household use has an inner diameter of about 5 cm and an outer diameter of about 20 cm. A larger heating coil for business use is also available, but the size of a heating coil can be appropriately selected according to the size of an induction heating cooker which is supposed to be used. It is preferred that the size of the flat surface part 31 of the induction heating body 3 be smaller than the outer diameter of the heating coil and larger than the inner diameter of the heating coil so that the outer periphery of the flat surface part 31 of the induction heating body 3 installed in the container main body 2 is more surely placed on the heating coil when the container 1 is placed on a predetermined position of an induction heating cooker.
If the center of the heating coil approximately coincides with the center of the induction heating body 3 when the container 1 is placed on a predetermined position of an induction heating cooker, heating can be performed most efficiently. However, if the center of the heating coil is largely deviated from this position, oscillation of the heating coil cannot be started. Furthermore, if the open end 33 of the induction heating body 3 is placed at a position deviated from the heating coil, a function of breaking the induction heating body 3 to stop an induction heating cooker, which will be mentioned later, cannot be worked normally.
Among commercially available induction heating cookers, there are some cookers in which the heating coil is concentrically arranged in double layers. In this case, as long as the open end 33 is positioned within a range from the inner diameter of the inside heating coil to the outer diameter of the outside heating coil, an induction heating cooker can work normally.

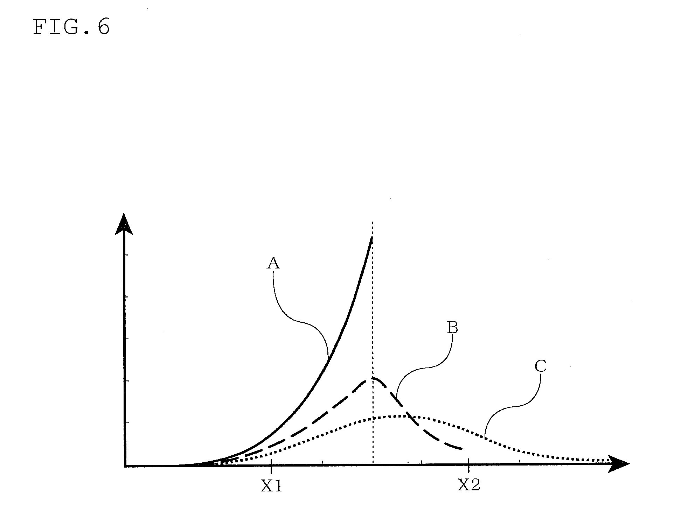

Here, the relationship between the size of the induction heating body 3 relative to the heating coil provided in an induction heating cooker and the density of eddy current induced in the induction heating body 3 when aluminum foil with a thickness of 10 µm is used as the induction heating body 3 is shown in FIG. 6 as a graph.
In the graph shown in FIG. 6, the distance from the center of the heating coil is taken as the abscissa and the density of eddy current induced in the induction heating body 3 is taken as the ordinate. X1 is the position of the inner diameter of the heating coil and X2 is the position of the outer diameter of the heating coil.

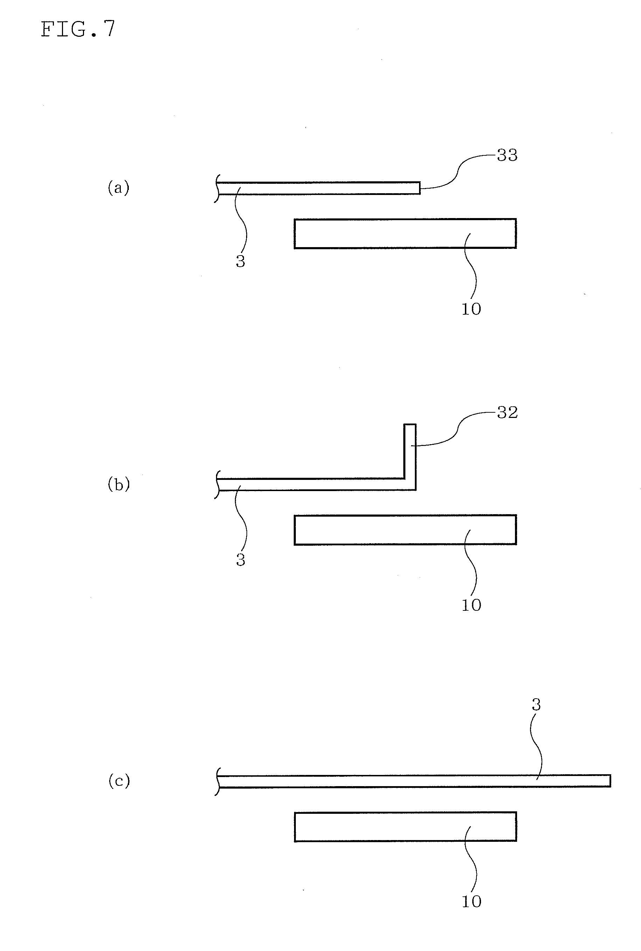

In FIG. 6, graph A shows a state in which the outer periphery of the flat surface part 31 of the induction heating body 3 is allowed to be the open end 33 on the heating coil, and graph B shows a state in which a rising part 32 is provided along the outer periphery of the flat surface part 31 which is at the same position as in the graph A. The right side portion of the chain line in the graph shows a change in density of an eddy current induced in the rising part 22. Graph C shows a state, for comparison purposes, the induction heating body 3 is made larger than the heating coil. The positional relationship between the heating coil C and the induction heating body 3 in each of the above-mentioned cases is diagrammatically shown in FIGs. 7(a) to (c).

In graph A in FIG. 6, as shown in FIG. 7(a), the open end 33 is positioned at almost middle of the heating coil C. In graph B in FIG. 6, as shown in FIG. 7(b), the outer periphery of the flat surface part 31 is positioned at almost middle of the heating coil C. As for the open edge 33 or the outer periphery of the flat surface part 31, as long as each of them is positioned on the heating coil C, specifically, as long as the distance of each of them from the middle of the heating coil is within a range of X1 to X2, the shape of graphs A and B do not change largely, and a relative difference in temperature in each part shows similar tendencies. Furthermore, when the heating coil is concentrically arranged in double layers, a relative difference in temperature in each part shows similar tendencies as long as the outer periphery of the open edge 33 or the outer periphery of the flat surface part 31 is within the range of the inner diameter of the inside heating coil and the outer diameter of the outside heating coil.

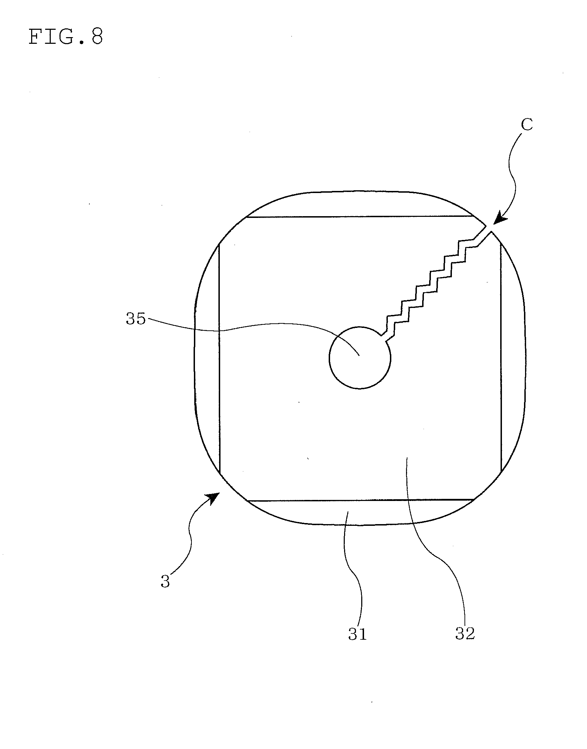

As can be understood from the graph shown in FIG. 6, the eddy current density becomes largest when the outer periphery of the flat surface part 31 of the induction heating body 3 is allowed to be the open end 33 on the heating coil (see graph A).
Therefore, by providing the open end 33 of the outer periphery of the flat surface part 31 of the induction heating body 3, the amount of heat generated in this open end 33 becomes largest, and this open end 33 is selectively heated excessively under specific conditions such as non-water heating. If heating is continued, in the container 1 shown in the figure, breakage occurs from either one of the open ends 33 positioned in the four corners of the container main body 3 towards the center of the flat surface part 31 (see FIG. 8), whereby safety mechanism works to stop an induction heating cooker.
FIG. 8 is an explanatory view showing a state in which the induction heating body 3 is broken, in which the broken part is shown by numeral C.

In order to provide the rising part 32 in the induction heating body 3, to lower the density of eddy current induced in a part where the rising part 32 is provided, to allow the amount of generated heat in the open edge 33 to be relatively large to cause the open edge 33 to generate excessive heat, thereby causing breakage to occur in the induction heating body 3, although depending on the state of using, it is preferred that the height from the flat surface part 1 to the upper edge of the rising part 32, except for the vicinity of the open edge 33 (that is, a part which is required to be heated excessively to cause breakage in the induction heating body 3), be 3 mm or more, more preferably 5 mm or more. The angle formed by the flat surface part 31 and the rising part 32 is preferably about 90 to 165°. It can be appropriately designed according to the shape or the like of the container main body 2.
There are no restrictions on the height of the rising part 32. As mentioned above, in order to engage the rising part 32 in the periphery of the opening of the container main body, if an engaging part is provided by horizontally bending the rising part 32 which is extended to a position which is sufficiently apart from the flat surface part 31, no influence is exerted on the amount of generated heat of the open edge 33.

At almost the middle of the induction heating body 3, a through hole 35 as shown in the figure may be formed so as to allow breakage to be easily formed from the open edge 33 to the middle of the surface flat part 31. The shape of the through hole 35 is not limited to a circular shape as shown in the figure, as long as it has the size and shape which do not cause un-uniform heating. For example, it may be formed by radially providing slits.
As shown in the graph of FIG. 6, in the vicinity of the middle of the heating coil, almost no eddy current is induced. The density of eddy current tends to increase gradually from a position which is apart from the center of the heating coil for a predetermined distance. Therefore, in respect of preventing un-uniform heating, it is preferred that the above-mentioned through hole 35 be provided at almost the middle of the flat surface part 31.

As mentioned above, in the container 1 of this embodiment, the induction heating body 3 is provided with the flat surface part 31 and the rising part 32 which is provided along the outer periphery of the flat surface part 31. In addition, the rising part 23 is partially cut, and the outer periphery of the flat surface 31 at a place where the rising part 32 is cut is allowed to be the open edge 33. Due to such configuration, under specific conditions such as non-water heating, this open edge 33 is selectively heated excessively, causing breakage towards the center of the flat surface part 31, whereby safety mechanism works to stop an induction heating cooker.
By allowing the inner surface part 31 to have an almost similar shape as the planer shape of the inner bottom surface 21 of the container main body 2 and by installing the induction heating body 3 in the container main body 2 such that the flat surface part 31 covers almost entire surface of the inner bottom surface 21, in normal use, no part in the induction heating body 3 is locally heated to excessively high temperatures as compared with other parts. Since the shape of the planer part can be arbitrarily selected, it is possible to allow the entire flat surface part to generate heat effectively to enhance heating efficiency. In addition, breakage by heat of the container main body can be effectively eliminated, whereby materials to be cooked can be heated safely and easily by means of a commercially available induction heating cooker.

Further, the position at which the open end is formed can be arbitrary set. For example, the inner bottom surface 21 of the container main body 2 is formed to be polygonal in shape and the open edge 33 is positioned at its corner, it is possible to allow the length L from the center of the flat surface part 31 to the open edge 33 of the induction heating body 3 to be largest (see FIG. 5(a)). By doing this, a part at which the induction heating body 3 is breaks, which part is positioned on a line connecting the middle of the heating coil and the open edge 33 of the induction heating body 3, i.e. a part which tends to be heated excessively, can be longest. As a result, a larger part is occupied by a portion in which an eddy current density is relatively high, whereby heating efficiency at the time of heating an object to be cooked can be enhanced.

The present invention is explained hereinabove with reference to preferred embodiments. The present invention is not limited to the embodiments as mentioned above, and it is needless to say various modifications are possible within the scope of the present invention.

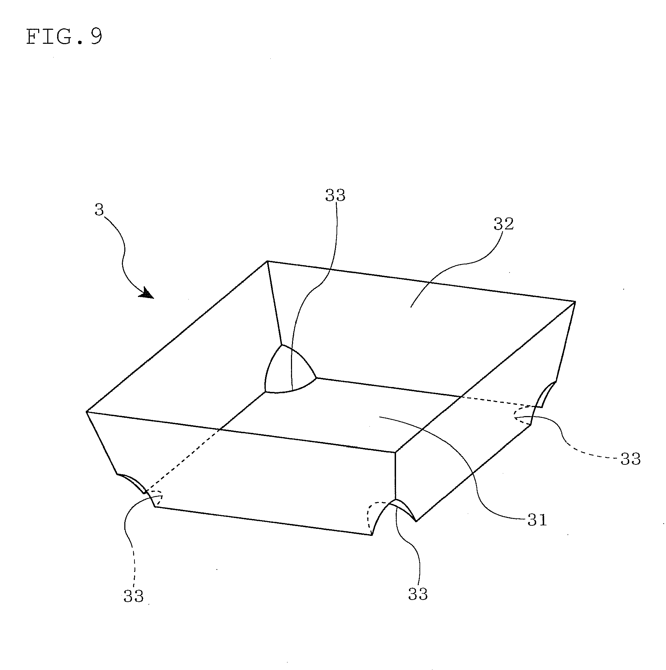

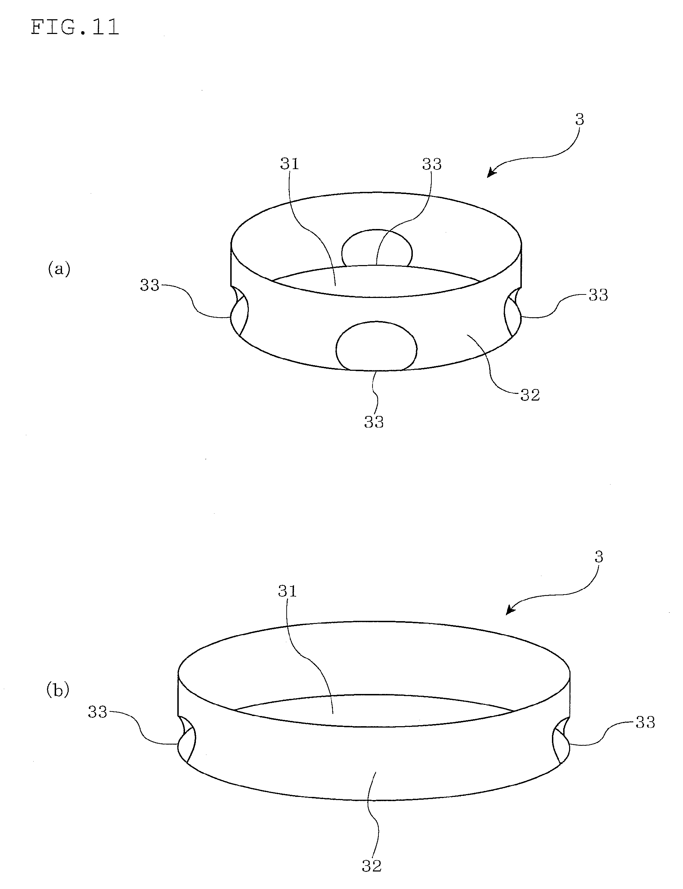

For example, in the above-mentioned embodiments, the induction heating body 3 is formed by cutting a conductive material in a predetermined shape in advance and bending its outer peripheral part such that it rises up. However, as shown in FIG. 9, it is possible to assemble a conductive material in a box-like shape so as to make it to correspond to the inner shape of the container main body 2, and to cut predetermined portions to form the open edge 33.
Further, as shown in FIG. 11 (a), the induction heating body 3 may have a circular flat surface part 31. Alternatively, as shown in FIG. 11 (b), the flat surface part 31 may be elliptical. In order to form the induction heating body 3 with such a shape, after punching predetermined parts of a conductive material to form the open edge 33, the conductive material may be subjected to embossing or the like. In FIG. 11 (b), the open edge 33 is formed at opposing positions on the longer diameter side of the flat surface part 31. However, a position where the open end 33 is formed can be arbitrarily selected as long as the induction heating body 3 can be broken by excessive heating of the open end 33.

In the above-mentioned embodiments, in correspondence with the inner bottom surface 21 of the container main body 2 which is almost square in shape, the open edges 33 are formed at the four corners thereof. The number of the open edge 33 is not limited thereto. Although one or two or more open edges 33 will suffice, it is preferred that a plurality of open edges 33 be formed. If a plurality of open edges 33 are formed, even when the container 1 is randomly placed on an induction heating cooker, it is possible to enhance the possibility that either one of the open edges 33 is placed on the heating coil, whereby breakage can be occurred easily without fail under specific conditions.

### INDUSTRIAL APPLICABILITY

As mentioned hereinabove, the present invention provides an induction heating cooking container capable of heating materials to be heated safely and easily by means of a commercially available induction heating cooker.

## Claims

1. An induction heating cooking container provided with on the inner bottom surface thereof an induction heating body in which heat is generated by eddy current induced by a high-frequency magnetic field, wherein said induction heating body has a flat surface part having a predetermined planer shape and a rising part provided along the outer periphery of said flat surface part, and one or two or more portions of said rising part is partially cut, and the outer periphery of said flat surface part where said rising part is cut is allowed to serve as an open edge.

2. The induction heating cooking container according to claim 1, wherein said open edge is selectively heated excessively to cause said induction heating body to break.

3. The induction heating body according to claim 1, wherein the flat surface part of said induction heating body is smaller than the outer diameter of a heating coil which generates a high-frequency magnetic field and larger than the inner diameter of a heating coil which generates a high-frequency magnetic field.

4. The induction heating cooking container according to any one of claims 1 to 2, wherein the outer periphery of a conductive material which has been cut into a predetermined shape is folded such that it rises up, thereby forming said induction heating body.

5. The induction heating cooking container according to any one of claims 1 to 3, wherein the flat surface part of said induction heating body is formed to have an almost similar shape as that of the inner bottom surface of said container main body, and the rising part of said induction heating body is formed such that it rises up along the inner surface of the side wall part of the container main body.

6. The induction heating body according to claim 4, wherein the inner bottom surface of the container main body is polygonal, and said open edges are positioned at the corners of said polygonal inner bottom surface.
